# EUROPÄISCHE PATENTSCHRIFT

(11) **EP 0 539 919 B1**
(45) Veröffentlichungstag und Bekanntmachung des Hinweises auf die Patenterteilung: **20.09.1995**
(21) Anmeldenummer: 92118343.0
(22) Anmeldetag: 27.10.1992
(51) Int. Cl.: B60S 9/02

(54) **Abstützvorrichtung für Sonderfahrzeuge, insbesondere für fahrbare Betonpumpen**
Support device for special vehicles, especially for movable concrete pumps
Dispositif de support pour véhicules spéciaux, notamment pour pompes à béton mobiles

(30) Priorität: 29.10.1991 DE 4135653
(43) Veröffentlichungstag der Anmeldung: 05.05.1993
(73) Patentinhaber: Hudelmaier, Gerhard, D-89075 Ulm (DE)
(72) Erfinder: Hudelmaier, Gerhard, D-89075 Ulm (DE)
(74) Vertreter: Grünecker, Kinkeldey, Stockmair & Schwanhäusser Anwaltssozietät

(56) Entgegenhaltungen:
- DE-B- 2 322 383
- DE-B- 2 364 296
- GB-A- 2 192 162

## Beschreibung

Die vorliegende Erfindung betrifft eine Abstützvorrichtung für Sonderfahrzeuge, insbesondere für fahrbare Betonpumpen.

Sonderfahrzeuge, zu denen im vorliegenden Fall z.B. Kranfahrzeuge, Hebebühnen-Fahrzeuge und dgl. sowie insbesondere Betonpumpen zählen, haben ein angetriebenes, straßentaugliches Fahrgestell, das es ermöglicht, das Fahrzeug zum jeweiligen Einsatz zu fahren. Um das Fahrzeug während des Einsatzes kippsicher und unbeeinflußt von den Elastizitäten der Fahrgestellaufhängung zu halten, ist bei diesen Fahrzeugen eine Abstützvorrichtung vorgesehen, die z.B. vier schwenkbare Abstützarme aufweist. Die Abstützarme werden während der Fahrt zum Fahrgestell geklappt und für den Einsatz ausgeschwenkt, so daß sich die wirksame Abstützfläche des Fahrzeuges entsprechend erhöht. Die Abstützarme sind in der Regel mit Hydrauliksystemen oder dgl. versehen, mit dessen Hilfe ein Auflagefuß des Abstützarmes in eine Position gebracht werden kann, in welcher das gesamte Fahrzeug mit seiner Straßenbereifung von der Aufstandsfläche, also z.B. vom Erdboden, abgehoben ist.

Eine gattungsgemäße Abstützvorrichtung für Sonderfahrzeuge ist z.B. aus der DE-A-2 322 383 bekannt.

Fahrbare Betonpumpen weisen üblicherweise einen, z.B. dreifach klappbaren Fördermechanismus auf, mit dem der Beton zum Einsatzort an der Baustelle gefördert werden kann. Dieser Fördermechanismus ist an einem Drehkranz befestigt, der in Fahrtrichtung gesehen, im vorderen Bereich des Fahrgestelles, hinter der Fahrerkabine, angeordnet ist. Der Fördermechanismus ist klappbar und weist z.B. drei Elemente auf, der Lange im wesentlichen der Länge des Fahrgestells abzüglich der Länge der Fahrerkabine entspricht. Wenn dieser Fördermechanismus im Betrieb auf die volle Länge aufgeklappt ist, entstehen erhebliche Kippmomente, die auf das Fahrzeug wirken. Dabei wirken die Kippmomente insbesondere nach vorne, da der Drehkranz des Fördermechanismus im vorderen Bereich des Fahrgestells angeordnet ist und der Fördermechanismus selbst üblicherweise im Betrieb über die Fahrerkabine nach vorne herausragt.

Um das nach vorne wirkende Kippmoment sicher aufnehmen zu können, benötigen derartige Betonpumpen eine Abstützvorrichtung, bei welcher die Aufstandseinrichtung der vorderen Abstützarme einen besonders großen Abstand zum Fahrgestell selbst hat.

Im Stand der Technik ist bekannt, diese vorderen Abstützarme mit einem Gelenk schwenkbar im vorderen Bereich des Fahrgestells anzulenken. Zum Abstützen des Fahrzeuges wird der Abstützarm nach vorne geschwenkt. Es hat sich jedoch gezeigt, daß diese Gestaltung im Betrieb erhebliche Nachteile ausweist. Zum Ausschwenken des Abstützarmes muß zu beiden Seiten des Fahrzeuges ein Freiraum zur Verfügung stehen, welcher der Länge des Abstützarmes und damit im wesentlichen der Länge des Fahrgestells entspricht. Der Einsatz einer solchen bekannten Betonpumpe ist deshalb mit einem erheblichen Platzbedarf verbunden, der auf vielen Baustellen, insbesondere auf Großbaustellen oder bei Gebäudesanierungen, nicht zur Verfügung steht.

Es ist deshalb die Aufgabe der vorliegenden Erfindung, eine Abstützvorrichtung für Sonderfahrzeuge und insbesondere für fahrbare Betonpumpen zu schaffen, welche die Nachteile des Standes der Technik nicht aufweist und welche insbesondere nur wenig Platz für das Positionieren der Abstützarme benötigt.

Diese Aufgabe wird erfindungsgemäß durch den Gegenstand des Anspruches 1 gelöst.

Zu bevorzugende Weiterbildungen der Erfindung sind Gegenstand der Ansprüche.

Die Erfindung beschreibt einen grundsätzlich neuen Weg für das Anbringen und das Positionieren der Abstützarme. Die Abstützarme sind über eine Gleitführung mit dem Fahrgestell verbunden. Diese Gleitführung erstreckt sich vorzugsweise in Längsrichtung des Fahrzeuges und hat vorzugsweise eine Länge, welche fast so groß ist, wie die Länge des Fahrgestells. An dieser Gleitführung ist mittels eines Gleitelementes der Abstützarm der Abstützvorrichtung befestigt. Dabei ist die Verbindung so geschaffen, daß der Abstützarm gelenkig zur Gleitführung angeordnet ist.

Weiterhin ist im Abstand zu dieser Gleitführung eine Gegenhaltevorrichtung angeordnet, die so beschaffen ist, daß sich der Abstützarm, wenn er wahrend des Abstützens vertikal nach oben belastet wird, an dieser Gegenhaltevorrichtung abstützen kann.

Der Abstützarm kann einstückig ausgebildet sein und hat dann in etwa die Länge des Fahrgestells. Vorzugsweise ist der Abstützarm mehrteilig und insbesondere zweiteilig gestaltet, wobei die einzelnen Abschnitte des Abstützarms dann vorzugsweise teleskopartig miteinander verbunden sind.

Die erfindungsgemäße Gestaltung der Abstützvorrichtung hat wesentliche Vorteile. Beim Stand der Technik ist die Angriffsposition des Abstützarmes am Fahrgestell immer dieselbe. Es ist deshalb nicht möglich, durch eine Änderung der Position des Abstützarmes am Fahrgestell auf die individuellen Gegebenheiten am jeweiligen Einsatzort Rücksicht zu nehmen. Bei der vorliegenden Erfindung ist die Position des Abstützarmes am Fahrzeug veränderlich. Dabei ist durch die Gegehhaltevorrichtung sichergestellt, daß der Abstützarm in jeder der möglichen Positionen die entsprechenden Abstützkräfte auf das Fahrgestell übertragen kann.

Ein weiterer wesentlicher Vorteil ist darin zu sehen, daß zum Positionieren des Abstützarmes nur äußerst wenig Platz benötigt wird. Wenn die Gleitführung in Längsrichtung des Fahrzeuges angeordnet ist, ist der Abstützarm während des Fahrbetriebes so am Fahrzeug gehalten, daß das Gleitelement sich im hinteren Bereich des Fahrzeuges befindet, während der Abstützarm im wesentlichen parallel zum Fahrgestell nach vorne weist. Zum Positionieren des Auslegers voll im Einsatz wird das Gleitelement nach vorne, d.h. in Fahrtrichtung bewegt und kann bis zum vorderen Ende der Gleitführung geschoben werden. Dabei wird auch der Abstützarm insgesamt nach vorne geschoben, ohne daß dazu zusätzlicher Platz an der Seite des Fahrzeuges erforderlich wäre.

Die Gleitführung und das Gleitelement können sehr unterschiedlich ausgestaltet sein. So kann die Gleitführung z.B. als langes zylindrisches Rohr ausgebildet sein und das Gleitelement als kurzes zylindrisches Rohr, dessen Innendurchmesser geringfügig größer ist als der Außendurchmesser des langen zylindrischen Rohres. Als Querschnitt des zylindrischen Rohres kann auch ein rechteckiges oder quadratisches Rohr Verwendung finden, wobei der Querschnitt des Gleitelementes dann entsprechend angepaßt ist. Das das lange Rohr umgreifende Gleitelement kann das Gleitelement voll umschließen; es kann aber auch teilumschließend ausgebildet sein.

Die Gleitführung kann ferner durch eine Vertiefung in einem massiven oder teilmassiven länglichen Element gebildet sein. In diesem Fall kann die Vertiefung T-förmig und das darin eingreifende Gleitelement ebenfalls T-förmig gestaltet werden.

Um das Verschieben des Gleitelementes in der Gleitführung zu erleichtern, können Rollen oder dgl. vorgesehen werden. Ferner ist es, zur Erhöhung der Stabilität der Abstützung möglich, das Gleitelement so zu gestalten, daß es während des Einsatzes in bezug auf die Gleitführung fixierbar ist.

Die gelenkige Verbindung zwischen der Gleitführung und dem Abstützarm sollte vorzugsweise zwei Freiheitsgrade aufweisen. Dies kann beispielsweise durch die Verwendung eines Kugelgelenkes erreicht werden. Weiterhin ist es möglich, zwischen der Gleitführung und dem Abstützarm orthogonal zueinander angeordnete Schwenkeinrichtungen vorzusehen, durch die der Abstützarm wie bei einem Kugelgelenk in die gewünschte Winkelposition zur Gleitführung gebracht werden kann.

Weitere Vorteile, Merkmale und Anwendungsmöglichkeiten der vorliegenden Erfindung ergeben sich aus der nachfolgenden Beschreibung im Zusammenhang mit den Figuren. Darin zeigen:
Fig. 1 eine schematische Aufsicht auf das Fahrgestell einer fahrbaren Betonpumpe mit einem Ausführungsbeispiel der erfindungsgemäßen Abstützvorrichtung;
Fig. 2 eine schematische Darstellung des Ausführungsbeispieles der Gleitführung im Teilschnitt;
Fig. 3 eine schematische Darstellung eines zweiten Ausführungsbeispieles gemäß Fig. 1 im Teilschnitt;
Fig. 4 eine schematische Darstellung eines weiteren Ausführungsbeispieles der Gleitführung im Teilschnitt;
Fig. 5 eine Teilaufsicht auf das Ausführungsbeispiel gemäß Fig. 4;
Fig. 6 eine schematische Aufsicht auf ein weiteres Ausführungsbeispiel.

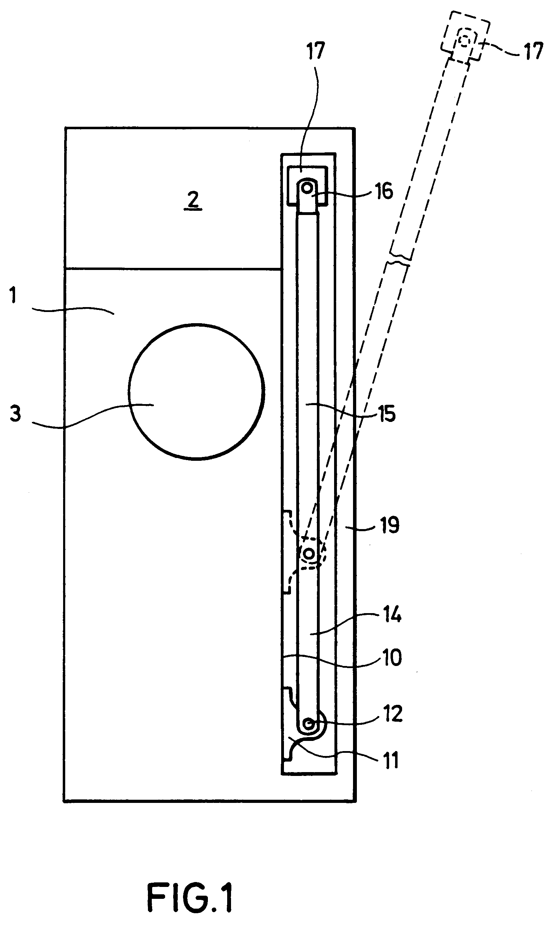

Fig. 1 zeigt ein erstes Ausführungsbeispiel der erfindungsgemäßen Abstützvorrichtung. Die fahrbare Betonpumpe weist ein Fahrgestell auf, welches insgesamt mit 1 bezeichnet ist und welches in seinem vorderen Bereich schematisch angedeutet eine Fahrerkabine 2 aufweist. Im vorderen Bereich des Fahrgestells 1 ist, hinter der Fahrerkabine 2, ein Drehkranz 3 angeordnet, welcher drehbar den Fördermechanismus einer Betonpumpe aufnimmt. Die Betonpumpe besteht, was in Fig. 1 nicht dargestellt ist, aus drei einzelnen Elementen, die gegeneinander klappbar sind und die während des Betriebes der Betonpumpe auseinandergeklappt werden. Der Fördermechanismus wird dann mittels des Drehkranzes 3 und Hydraulikeinheiten, die zwischen den einzelnen klappbaren Elementen angeordnet sind, derart positioniert, daß er den zu fördernden Beton an die gewünschte Stelle der Baustelle fördern kann. Bei dem in Fig. 1 dargestellten Ausführungsbeispiel der erfindungsgemäßen Abstützvorrichtrung ist aus Gründen der Vereinfachung nur ein Abstützarm dargestellt. Das Ausführungsbeispiel hat jedoch insgesamt vier Abstützarme, von denen ein zweiter Abstützarm parallel zum dargestellten Abstützarm auf der (in Fahrtrichtung) linken Seite des Fahrgestells angeordnet ist und zwei Abstützarme vorgesehen sind, die im hinteren Bereich des Fahrgestells schwenkbar gehalten sind und die das Fahrzeug in konventioneller Weise nach hinten abstützen.

Die Abstützvorrichtung beim gezeigten Ausführungsbeispiel weist eine Gleitführung 10 auf, die parallel zu der (sich in Fahrtrichtung erstreckenden) Längsachse des Fahrgestells angeordnet ist. In dieser Gleitführung ist längsverschieblich ein Gleitelement 11 befestigt. An diesem Gleitelement ist, mittels eines Bolzens 12, drehbeweglich der Abstützarm 14 angeordnet. Der Abstützarm 14 besteht aus zwei ineinandergeschobenen Rohren 15, 16, so daß der Abstützarm teleskopartig verlängerbar ist. Am vorderen Ende des Abstützarmteiles 16 ist eine Aufstandsplattform 17 vorgesehen. Diese Aufstandsplattform ist hydraulisch absenkbar und anhebbar. Parallel zur Gleitführung 10 ist eine Gegenhaltevorrichtung 19 vorgesehen, die als Rohr, aber auch als U-Profil, T-Träger oder dgl. ausgebildet sein kann.

Die Funktion dieser Abstützvorrichtung ist wie folgt: Im Fahrbetrieb wird der Abstützarm der Abstützvorrichtung so angeordnet, wie dies mit festen Linien in Fig. 1 dargestellt ist. Der Abstützarm ist also dann parallel zur Längsachse und horizontal ausgerichtet. Vor dem Ausfahren des Fördermechanismus der Betonpumpe wird die Abstützvorrichtung positioniert. Dazu wird der Abstützarm insgesamt mit dem Gleitelement 11 in der Gleitführung nach vorne verschoben. Da der Abstützarm aus zwei ineinandergeschobenen teleskopierbaren Rohren besteht, kann der Abstützarm soweit ausgefahren werden, daß der Abstand der Aufstandsplattform von der vorderen Kante des Fahrzeuges fast dem Zweifachen der Fahrgestellänge entspricht. Zusätzlich zur Ausfahrbewegung kann der Abstützarm dann seitlich geschwenkt werden.

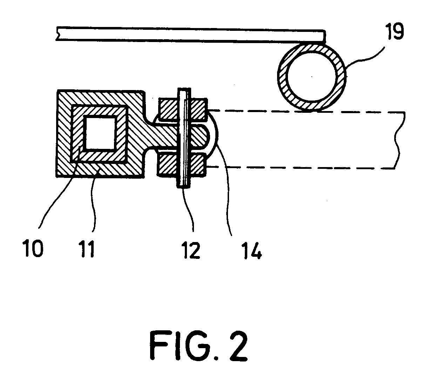

Einer der wesentlichen Vorteile der erfindungsgemäßen Gestaltung ist, daß der Abstützarm eine Vielzahl von Positionen in bezug auf das Fahrgestell einnehmen kann. Eine solche Position ist beispielhaft mit gestrichelten Linien in Fig. 1 und 2 dargestellt. Hier ist der Abstützarm geringfügig nach außen geschwenkt. Das Gleitelement 11 ist jedoch nicht in seiner vordersten Position. Da die Gegenkraft der Abstützung durch die Gegenhaltevorrichtung 19 in jeder, auch nach der Seite geschwenkten Position aufgenommen wird, hat die Abstützvorrichtung in jeder dieser Positionen ihre volle Tragfähigkeit.

Bei dem Ausführungsbeispiel gemäß Fig. 1 bleibt der Abstützarm auch im ausgefahrenen Zustand in einer im wesentlichen horizontalen Position. Die zur Abstützung erforderliche Vertikalbewegung wird ausschließlich durch eine hydraulische Einheit oder eine Spindeleinheit bewirkt, die im Bereich der Plattform 17 angeordnet ist.

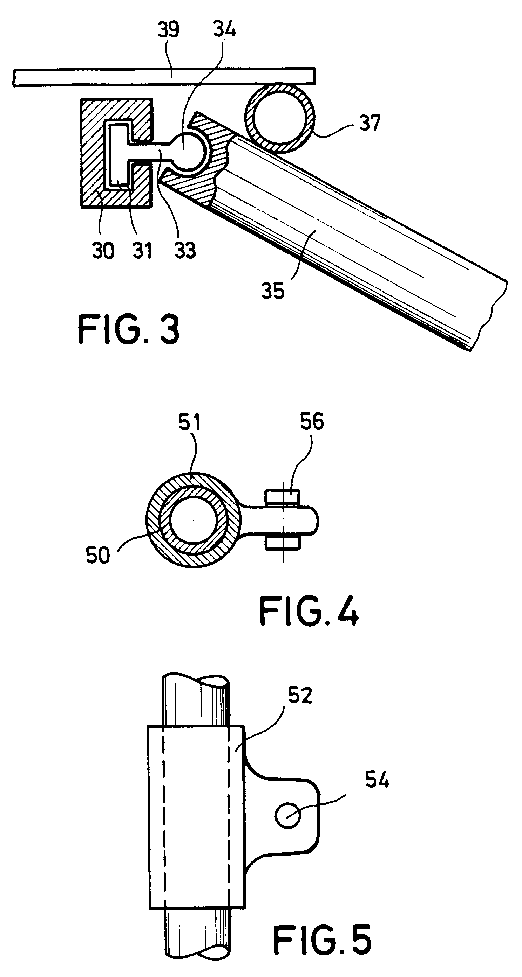

Fig. 3 zeigt eine alternative Ausführungsform, bei der der Abstützarm nicht nur ausfahrbar, sondern auch in bezug auf die Horizontale schwenkbar ist.

Bei dieser Ausführungsform ist eine Gleitführung 30 vorgesehen, welche eine T-förmige Vertiefung 31 aufweist. In dieser T-förmigen Vertiefung 31 ist das Gleitelement 33 verschieblich gelagert. Das Gleitelement 33 ist in seinem vorderen Bereich mit einem Kugelelement 34 verbunden, an welchem der Abstützarm 35 befestigt ist. Der Abstützarm 35 besteht ebenfalls aus zwei ineinandergeschobenen Rohren, wie dies in bezug auf das Ausführungsbeispiel gemäß Fig. 1 erläutert wurde.

Parallel zur Gleitführung 30 ist die Gegenhaltevorrichtung 37 angeordnet, welche rohrförmig gestaltet ist und mittels einer, mit einem Arm 39 schematisch angedeuteten Einrichtung mit dem Fahrgestell verbunden ist.

Bei dieser Ausführungsform kann das Gleitelement zum Abstützen ebenfalls in jeder beliebigen Position innerhalb der Gleitführung 30 angeordnet sein. Durch die mit zwei Freiheitsgraden erfolgende Bewegungsmöglichkeit kann der Abstützarm besonders gut an die unterschiedlichen Einsatzmöglichkeiten angepaßt werden.

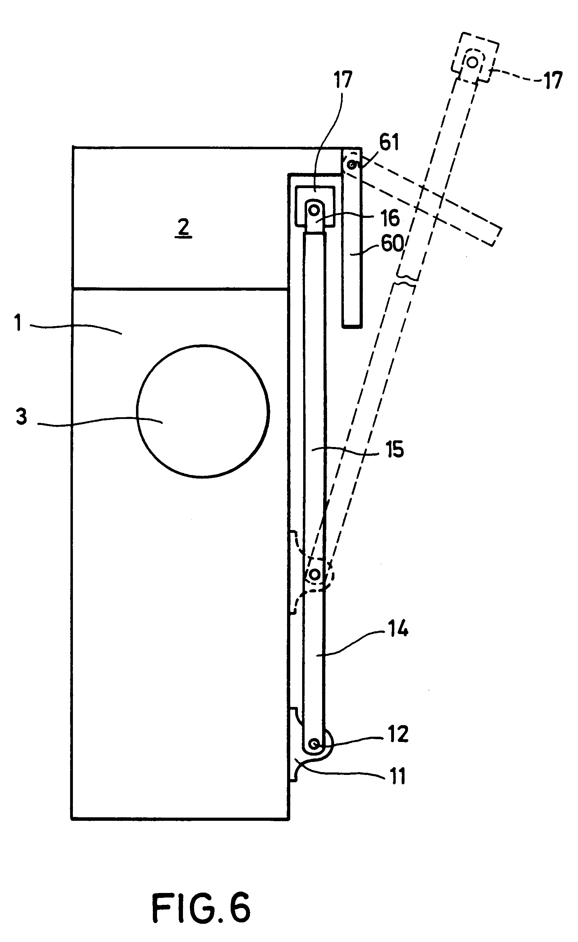

Die Fig. 4 und 5 zeigen eine weitere Gestaltung, bei der der Auslegerarm sich in zwei Freiheitsgraden in bezug auf die Gleitführung bewegen kann. Die Gleitführung 50 ist als langes, zylindrisches Rohr ausgebildet, auf dem das Gleitelement 51 gleitet. Das Gleitelement 51 besteht im wesentlichen aus einem kurzen zylindrischen Rohr 52, dessen Innendurchmesser geringfügig größer ist als der Außendurchmesser des Rohres 50, an welchem ein Bolzenauge 54 angeordnet ist. An diesem Bolzenauge ist, wie dies in Fig. 4 schematisch angedeutet ist, der Abstützarm 56 drehbar befestigt.

Die Fig. 6 zeigt ein weiteres Ausführungsbeispiel der erfindungsgemäßen Abstützvorrichtung. Die Gestaltung entspricht im wesentlichen der Gestaltung gemäß Fig. 1, weshalb auch zur Bezeichnung der gleichen Teile die gleichen Bezugszeichen verwendet worden sind. Im Unterschied zur Gestaltung gemäß Fig. 1 ist hier jedoch eine Gegenhaltevorrichtung vorgesehen, die schwenkbar im vorderen Bereich des Fahrgestells angeordnet ist. Beim gzeigten Ausführungsbeispiel weist die Gegenhaltevorrichtung ein horizontal angeordnetes Rohr- oder Profilstück 60 auf, welches mittels eines Bolzens 61 an einer entsprechenden Aufnahmeeinrichtung des Fahrgestells schwenkbar gelagert ist. Dabei ist die Aufnahmeeinrichtung am Fahrgestell so beschaffen, daß die aus den Abstützkräften resultierenden Biegemomente in der Aufnahmeeinrichtung aufgenommen werden können.

Bei den Ausführungsbeispielen gemäß den Fig. 1 bis 6 sind keine Einrichtungen dargestellt, um das Gleitelement in der Fahrposition und/oder in der Abstützposition zu arretieren. Es wird jedoch ausdrücklich darauf hingewiesen, daß vorzugsweise bei allen Ausführungsbeispielen derartige Arretierungen verwendet werden. Weiterhin kann es bei speziellen Anwendungsfällen vorteilhaft sein, auch eine Arretierung des Auslegerarmes in bezug auf die Gegehaltevorrichtung und, bei einer schwenkbaren Gegenhaltevorrichtung, auch eine Arretierungsmöglichkeit für die Gegenhaltevorrichtung vorzusehen.

## Patentansprüche

1. Abstützvorrichtung für Sonderfahrzeuge und insbesondere für fahrbare Betonpumpen (1), mit mehreren Abstützarmen (14,35), die von einer Fahrposition, in welche sie die Fahrbewegung des Fahrzeuges nicht behindern, um jeweils eine im wesentlichen vertikale Achse eines Gelenkes in eine Abstützposition schwenkbar sind,
**dadurch gekennzeichnet,**
daß die Abstützvorrichtung mindestens eine Gleitführung (10,30,50) aufweist, in welcher jeweils das mit einem Gleitelement (11,33,51) versehene Gelenk geführt ist, und
daß jedes Gleitelement (11,33,51) in der Gleitführung (10,30,50) von einer ersten Position, in welcher sich der Abstützarm (14,35) in Fahrposition befindet, in eine zweite Position, in welcher sich der Abstützarm (14,35) in einer Abstützposition befindet, verschiebbar ist.

2. Abstützvorrichtung gemäß Anspruch 1, **dadurch gekennzeichnet,** daß im Abstand zur Gleitführung eine (10,30,50) Gegenhaltevorrichtung (19,37,60) angeordnet ist, die so beschaffen ist, daß sich der Abstützarm (14,25), wenn er in der Abstützposition vertikal nach oben belastet wird, an dieser Gegenhaltevorrichtung (19,37,60) abstützt.

3. Abstützvorrichtung gemäß Anspruch 1 oder 2, **dadurch gekennzeichnet,** daß zwei Gleitführungen (10,30,50) vorgesehen sind, welche im wesentlichen parallel zur Längsachse des Fahrzeugs angeordnet sind, und daß der Stützarm (14,35) in Fahrposition im wesentlichen parallel zu den Gleitführungen (10,30,50) angeordnet ist.

4. Abstützvorrichtung gemäß Anspruch 2 oder 3, **dadurch gekennzeichnet,** daß die Gegenhaltevorrichtung (19,37) ein längliches Element aufweist, welches sich parallel zur Gleitführung (10,30,50) erstreckt.

5. Abstützvorrichtung gemäß mindestens einem der Ansprüche 1 bis 3, **dadurch gekennzeichnet,** daß die Gegenhaltevorrichtung (60) schwenkbar am Fahrzeug angeordnet ist.

6. Abstützvorrichtung gemäß mindestens einem der Ansprüche 1 bis 5, **dadurch gekennzeichnet,** daß der Anstützarm (14,35) mindestens zwei, teleskopartig ineinander greifende und gegeneinander verschiebbare Elemente (15,16) aufweist, durch welche die Länge des Abstützarmes (14,35) veränderlich ist.

7. Abstützvorrichtung gemäß mindestens einem der Ansprüche 1 bis 6, **dadurch gekennzeichnet,** daß das die Verbindung zwischen Gleitelement (11,33,51) und Abstützarm (14,35) bildende Gelenk so angeordnet ist, daß der Abstützarm (14,35) in Bezug auf das Fahrgestell nach außen schwenkbar ist.

8. Abstützvorrichtung gemäß Ansprch 7, **dadurch gekennzeichnet,** daß das Gelenk zwei Freiheitsgrade aufweist, so daß der Abstützarm (35) im wesentlichen in zwei Ebenen bewegbar ist.

9. Abstützvorrichtung gemäß mindestens einem der Ansprüche 1 bis 8, **dadurch gekennzeichnet,** daß die Anstützvorrichtung zumindest zwei Abstützarme (14,35) aufweist, welche an einer Gleitführung (10,30,50) angeordnet sind und welche das Fahrzeug im wesentlichen nach vorne abstützen, sowie zwei Abstützarme (14,35), die schwenkbar mittels eines Gelenkes im hinteren Bereich des Fahrzeuges angeordnet sind, die das Fahrzeug im wesentlichen nach hinten abstützen.

10. Verwendung einer Abstützvorrichtung gemäß eines der Ansprüche 1 bis 9 für eine fahrbare Betonpumpe (1).

## Claims

1. Supporting device for special vehicles, and in particular for mobile concrete pumps (1), having a number of supporting arms (14,35) which can be pivoted about the essentially vertical axis of a joint, in each case, from a travelling position, in which they do not hinder the travelling movement of the vehicle, into a supporting position,
**characterized in that**
the supporting device has at least one sliding guide (10,30,50) in which the joint provided with a sliding element (11,33,51) is guided in each case, and
each sliding element (11,33,51) can be displaced in the sliding guide (10,30,50) from a first position in which the supporting arm (14,35) is in the travelling position into a second position in which the supporting arm (14, 35) is in a supporting position.

2. Supporting device according to Claim 1, **characterized in that** there is disposed, in the gap relative to the sliding guide (10,30,50), a countersupporting device (19,37,60) which is so constituted that the supporting arm (14,25) is supported, when it is subjected to load vertically upwards in the supporting position, on the said countersupporting device (19,37,60).

3. Supporting device according to Claim 1 or 2, **characterized in that** two sliding guides (10,30,50) are provided, which are disposed essentially parallel to the longitudinal axis of the vehicle, and that, in the travelling position, the supporting arm (14,35) is disposed essentially parallel to the sliding guides (10,30,50).

4. Supporting device according to Claim 2 or 3, **characterized in that** the countersupporting device (19,37) has an elongated element which extends parallel to the sliding guide (10,30,50).

5. Supporting device according to at least one of Claims 1 to 3, **characterized in that** the countersupporting device (60) is disposed pivotably on the vehicle.

6. Supporting device according to at least one of Claims 1 to 5, **characterized in that** the supporting arm (14,35) has at least two elements (15, 16) which engage in one another in a telescopic manner and are displaceable in relation to each other and by means of which the length of the supporting arm (14, 35) can be varied.

7. Supporting device according to at least one of Claims 1 to 6, **characterized in that** the joint forming the connection between the sliding element (11,33,51) and the supporting arm (14, 35) is so disposed that the supporting arm (14, 35) can be pivoted outwards in relation to the travelling chassis.

8. Supporting device according to Claim 7, **characterized in that** the joint has two degree of freedom, so that the supporting arm (35) can be moved essentially in two planes.

9. Supporting device according to at least one of Claims 1 to 8, **characterized in that** the supporting device has at least two supporting arms (14, 35) which are disposed on a sliding guide (10,30,50) and support the vehicle essentially in the forward direction, and also two supporting arms (14, 35) which are disposed for pivoting movement by means of a joint in the rear region of the vehicle and support the vehicle essentially in the rearward direction.

10. Use of a supporting device according to one of Claims 1 to 9 for a mobile concrete pump (1).

## Revendications

1. Dispositif de support pour véhicules spéciaux, notamment pour pompes à béton mobiles (1), avec plusieurs bras-supports (14,35) que l'on peut faire pivoter d'une position de déplacement, dans laquelle ils ne gênent pas le mouvement de déplacement du véhicule, autour d'un axe essentiellement vertical d'une articulation, à une position de support, caractérisé en ce que
le dispositif de support présente au moins un guide à glissière (10,30,50) dans lequel est guidée respectivement l'articulation munie d'un élément de glissement (11,33,51), et
en ce que chaque élément de glissement (11,33,51) peut coulisser dans le guide à glissière (10,30,50) d'une première position, dans laquelle le bras-support (14,35) se trouve en position de déplacement, à une deuxième position dans laquelle le bras-support (14,35) se trouve dans une position de support.

2. Dispositif de support selon la revendication 1, caractérisé en ce que, à distance du guide à glissière (10,30,50), est placé un dispositif de contre-support (19,37,60) qui est ainsi fait que le bras-support (14,25) s'appuie sur ce dispositif de contre-support (19,37,60) lorsqu'il est chargé verticalement vers le haut dans la position de support.

3. Dispositif de support selon la revendication 1 ou 2, caractérisé en ce que deux guides à glissière (10,30,50) sont prévus qui sont disposés essentiellement parallèlement à l'axe longitudinal du véhicule, et en ce que le bras-support (14,35) est disposé en position de déplacement essentiellement parallèlement aux guides à glissière (10,30,50).

4. Dispositif de support selon la revendication 2 ou 3, caractérisé en ce que le dispositif de contre-support (19,37) présente un élément allongé qui s'étend parallèlement au guide à glissière (10,30,50).

5. Dispositif de support selon au moins l'une quelconque des revendications 1 à 3, caractérisé en ce que le dispositif de contre-support (60) est disposé sur le véhicule de façon à pouvoir pivoter.

6. Dispositif de support selon au moins l'une quelconque des revendications 1 à 5, caractérisé en ce que le bras-support (14,35) présente au moins deux éléments (15,16) emmanchés l'un dans l'autre de manière télescopique et coulissants l'un par rapport à l'autre, par lesquels on peut faire varier la longueur du bras-support (14,35).

7. Dispositif de support selon au moins l'une quelconque des revendications 1 à 6, caractérisé en ce que l'articulation formant la liaison entre l'élément de glissement (11,33,51) et le bras-support (14,35) est disposée de telle façon que l'on peut faire pivoter le bras-support (14,35) vers l'extérieur par rapport au châssis.

8. Dispositif de support selon la revendication 7, caractérisé en ce que l'articulation présente deux degrés de liberté de telle façon que le bras-support (35) soit mobile principalement sur deux niveaux.

9. Dispositif de support selon au moins l'une quelconque des revendications 1 à 8, caractérisé en ce que le dispositif de support présente au moins deux bras-supports (14,35) qui sont disposés sur un guide à glissière (10,30,50) et qui soutiennent le véhicule essentiellement vers l'avant, et deux bras-supports (14,35) qui sont disposés de façon à pouvoir pivoter au moyen d'une articulation dans la zone arrière du véhicule et soutiennent le véhicule essentiellement vers l'arrière.

10. Utilisation d'un dispositif de support selon l'une quelconque des revendications 1 à 9 pour une pompe à béton mobile (1).
